# EUROPEAN PATENT SPECIFICATION

(11) **EP 1 678 267 B1**
(45) Date of publication and mention of the grant of the patent: **21.12.2011**
(21) Application number: 04791213.4
(22) Date of filing: 13.10.2004
(51) Int. Cl.: C09D 183/10, C08G 77/42, C08G 77/20, C08G 77/26

(54) **COMPOSITION FOR PRODUCING A BARRIER LAYER FOR GASES**
ZUSAMMENSETZUNG ZUR HERSTELLUNG EINER BARRIERESCHICHT FÜR GASE
COMPOSITION POUR LA PRODUCTION D'UNE COUCHE BARRIERE DE GAZ

(30) Priority: 21.10.2003 DE 10350125
(43) Date of publication of application: 12.07.2006
(73) Proprietor: Evonik Degussa GmbH, 45128 Essen (DE)
(72) Inventor: EDELMANN, Roland, 79618 Rheinfelden (DE); MONKIEWICZ, Jaroslaw, 79618 Rheinfelden (DE); BORUP, Björn, 79618 Rheinfelden (DE); MEHNERT, Reiner, 04416 Markkleeberg (DE); ELSNER, Christian, 04249 Leipzig (DE); CULIK, Hubert, A-2000 Stockerau (NÖ) (AT); BREITWIESER, Christian, A-1020 Wien (AT)
(86) International application number: PCT/EP2004/052522
(87) International publication number: WO 2005/040294

(56) References cited:
- EP-A- 0 476 202
- WO-A-01/66655
- US-A- 3 837 897
- US-B1- 6 423 416

## Description

The present invention relates to an organosilane-based composition for producing a barrier layer for gases. The invention also relates to a process for preparing the composition, and to use of the composition.

Plastics, processed to give foils or hollow articles, are increasingly used for producing packaging materials as a replacement for metals or glass. Plastics weigh less than glass and metals, and the amounts of materials required are smaller. Examples which may be mentioned of hollow articles made from plastics are the PET bottles composed of polyethylene terephthalate that are widely used nowadays. These are widely used by the drinks industry for bottling mineral waters or soft drinks.

The structure of packaging materials composed of plastic or of paper or paperboard gives them some degree of permeability for gases, water vapor, and flavors. This permeability inhibits the use of plastics packaging materials in sectors where particularly stringent requirements are placed upon barrier properties. In these sectors, permeability to gases and water vapor has to be reduced via barrier layers applied to the plastics materials.

The prior art discloses various coating materials for producing the barrier layer.

DE 196 50 286 C2 describes an inorganic-organic hybrid material (ORMOCER layer) on a backing material with at least 2 layers, where one layer is vapor-deposited SiOₓ (100 nm), overlacquered with ORMOCER (3 µm).

WO 01/66653 A1 describes bisaminotrimethoxysilane in methanol as solvent for producing barrier layers on a backing material.

WO 01/66654 A1 and WO 01/66655 describe condensates derived from bisaminomethoxysilane or from other aminosilanes and from phenolic compounds in methanol as materials for producing barrier layers.
WO 01/66656 A2 and WO 01/66662 describe preparations composed of a mixture of bisaminotrimethoxysilane and aminoethylaminopropyltrimethoxysilane with multifunctional acrylates and ethylenically unsaturated organic acids in methanol. The barrier layer is UV-cured.

WO 01/66661 A1 describes reactive silanes, ethylenically unsaturated acids, and polyethyleneimine in isopropanol.

US 5 077 135 (EP 0 313 252 A2, EP 0 392 115 A2, EP 476 202 A1, EP 0 505 274 A2) describes, for producing the coating material, silanes such as dimethyldimethoxy-, methyltrimethoxy-, methacryloxypropyltrimethoxy-, vinyltriethoxy-, and aminopropyltriethoxysilane, vinylbenzylaminosilane, and mixtures of these silanes in methanol as solvent.

A feature common to all of these is the production of a barrier layer with barrier action with respect to gas and water vapor on plastic films (e.g. PE, PP) for packaging material.

Although the barrier layers disclosed in the prior art have some degree of barrier action with respect to gases and water vapor, it is desirable to make further improvement in the barrier action. It is therefore an object of the present invention to provide a composition which gives barrier layers with improved barrier action.

This object is achieved via an organosilane-based composition which comprises
(i) at least one organoalkoxysilane whose organofunctionality displays at least one unsaturated hydrocarbon group,
(ii) at least one aminoalkylalkoxysilane,
(iii) at least one polyol,
(iv) optionally, another alkoxysilane or alkoxysiloxane, and
(v) optionally, at least one nano- or microscale semimetal oxide or metal oxide, semimetal oxide hydroxide or metal oxide hydroxide, or semimetal hydroxide or metal hydroxide, and/or
(vi) at least one cocondensate composed of the components (i), (ii), (iii), and, optionally, (iv), and also, optionally, (v), and/or
(vii) reaction products produced under hydrolysis conditions from the components (i), (ii), (iii), and, optionally, (iv), and also, optionally, (v)
(viii) and organic solvent, with the proviso that there is a molar ratio (i) : (ii) : (iii) where (i) = 1 and (ii) = from 0.5 to 1.5, and (iii) = from 0.3 to 1.1.

The molar ratio (i) : (ii) is advantageously from 3 : 2 to 2 : 3.

The molar ratio (i) : (ii) : (iii) is advantageously 1 : 1 : 0.5 or 1 : 1 : 0.6 or 1 : 1 : 0.7 or 1 : 1 : 0.8 or 1 : 1 : 0.9 or 1 : 1 : 1 or 1 : 0.9 : 1 or 1 : 0.9 : 0.9 or 1 : 0.9 : 0.8 or 1 : 0.9 : 0.7 or 1 : 0.9 : 0.6 or 1 : 0.9 : 0.5 or 1 : 1.1 : 1 or 1 : 1.1 : 0.9 or 1 : 1.1 : 0.8 or 1 : 1.1 : 0.7 or 1 : 1.1 : 0.6 or 1 : 1.1 0.5 or 1 : 1.2 : 1 or 1 : 1.2 : 0.9 or 1 : 1.2 : 0.8 or 1 : 1.2 : 0.7 or 1 : 1.2 : 0.6 or 1 : 1.2 : 0.5.

The selection of component (i) is advantageously from the series vinyltrimethoxysilane, vinyltriethoxysilane, 3-methacryloxypropyltrimethoxysilane, 3-methacryloxypropyltriethoxysilane, 3-methacryloxypropylmethyldimethoxysilane, vinylmethyldimethoxysilane, vinylmethyldiethoxysilane, 3-methacryloxypropylmethyldiethoxysilane, 3-acryloxypropyltrimethoxysilane, 3-acryloxypropyltriethoxysilane, 3-acryloxypropylmethyldimethoxysilane, 3-acryloxypropylmethyldiethoxysilane.

Component (ii) is advantageously selected from the series 3-aminopropyltrimethoxysilane, 3-aminopropyltriethoxysilane, N-phenyl-3-aminopropyltrimethoxysilane, N-phenyl-3-aminopropyltriethoxysilane, N-butyl-3-aminopropyltrimethoxysilane, N-butyl-3-aminopropyltriethoxysilane, N-methyl-3-aminopropyltrimethoxysilane, N-methyl-3-aminopropyltriethoxysilane, N-(2-aminoethyl)-3-aminopropyltrimethoxysilane, N-(2-aminoethyl)-3-aminopropyltriethoxysilane, N,N-di(2-aminoethyl)-3-aminopropyltrimethoxysilane, N-[N'-(2-aminoethyl)-2-aminoethyl]-3-aminopropyltrimethoxysilane, N,N-di(2-aminoethyl)-3-aminopropyltriethoxysilane, N-[N'-(2-aminoethyl)-2-aminoethyl]-3-aminopropyltriethoxysilane, 3-aminopropylmethyldimethoxysilane, 3-aminopropylmethyldiethoxysilane, N-butyl-3-aminopropylmethyldimethoxysilane, N-butyl-3-aminopropylmethyldiethoxysilane, N-(2-aminoethyl)-3-aminopropylmethyldiethoxysilane, N-(2-aminoethyl)-3-aminopropylmethyldiethoxysilane, N,N-di(2-aminoethyl)-3-aminopropylmethyldimethoxysilane, N-[N'-(2-aminoethyl)-2-aminoethyl]-3-aminopropylmethyldimethoxysilane, N,N-di(2-aminoethyl)-3-aminopropylmethyldiethoxysilane, N-[N'-(2-aminoethyl)-2-aminoethyl]-3-aminopropylmethyldiethoxysilane.

Component (iii) is advantageously an aliphatic or aromatic polyol. Suitable compounds of this type are glucose, xylitol, mannitol, sorbitol, resorcinol, pyrogallol, hydroquinone, o-hydroxybenzoic acid (salicylic acid) or glycerol.

Component (iv) is advantageously selected from the series tetraethoxysilane, oligomeric tetraalkoxysilane, propyltrimethoxysilane, propyltriethoxysilane, octyltrimethoxysilane, octyltriethoxysilane, alcoholic and/or aqueous compositions of oligomeric cocondensates composed of aminoalkylalkoxysilanes and of fluoroalkylalkoxysilanes, and also oligomeric condensates or cocondensates composed of alkylalkoxysilanes and/or of vinylalkoxysilanes. The condensates or cocondensates may be prepared from, by way of example, propyltrimethoxysilane, propyltriethoxysilane, octyltrimethoxysilane, octyltriethoxysilane, vinyltrimethoxysilane, or vinyltriethoxysilane.

Component (v) is advantageously selected from the series silica, silicates, aluminum oxides, aluminum oxide hydroxides, aluminum hydroxide. The silica used may comprise precipitated or fumed silica. Examples of silicates are aluminosilicates, aluminum silicates, phyllosilicates, and the like. The aluminum oxide hydroxide used preferably comprises boehmite.

The organic solvent is advantageously a straight-chain or branched, aliphatic or cycloaliphatic or araliphatic or aromatic alcohol.

If the composition is intended to be cured by UV radiation, it advantageously comprises a photoinitiator, its amount preferably being from 1 to 4% by weight, based on the total weight of the composition.

The solids content of the composition is advantageously from 10 - 60% by weight.

The invention also provides a process for preparing an organosilane-based composition for producing a barrier layer for gases. The process comprises
a) mixing together components (i), (ii), (iii), optionally (iv), optionally solvents and water, and permitting the mixture to react
   or
b) forming an initial charge from components (i), (ii), and, optionally, (iv), heating the mixture, adding component (iii), optionally dissolved in a solvent, and adding water, and permitting the mixture to react at reflux
   or
c) forming an initial charge from components (i), (ii), optionally (iv), optionally solvents, and, optionally, component (v), with thorough mixing, heating the mixture, adding component (iii), optionally dissolved in a solvent, and adding water, and permitting the mixture to react at reflux
   or
d) dispersing fine-particle silica in vinylsilane, adding the other components, and reacting the mixture at room temperature or at reflux
where there is a molar ratio (i) : (ii) : (iii) where (i) = 1 and (ii) = from 0.5 to 1.5 and (iii) = from 0.3 to 1.1.

The solvent used preferably comprises alcohol, water, or an aqueous alcohol mixture.

In the inventive process it is advantageous to add activated carbon to the product mixture obtained after the reaction, and to filter the mixture and, optionally, remove solvent fractions from the filtrate.

The amount of water used per mole of silicon of components (i), (ii), and (iv) is advantageously from 0.5 to 1.8 mol, preferably from 0.85 to 1.8 mol, in particular from 1.3 to 1.4 mol.

The amount of component (v) advantageously used is from 0.01 to 40% by weight, preferably from 1.0 to 30% by weight, particularly preferably from 5.0 to 25% by weight, in particular using fumed silica in combination with glucose, xylitol, mannitol, sorbitol, resorcinol, pyrogallol, hydroquinone, salicylic acid, or glycerol, based on the entirety of components (i) to (iv).

The reaction of the components is preferably carried out at a temperature in the range from 10 to 90°C, preferably from 20 to 80°C, for a period of from 1 to 36 hours, preferably from 2 to 24 hours.

The invention also provides the use of the compositions described above for producing a radiation-cured barrier layer for gases, on a packaging material composed of plastic, paper, cardboard, or paperboard.

The invention also provides the use of the inventive composition for producing a radiation-cured barrier layer for gases, where, for further improvement in the barrier properties, at least one further coating capable of curing by a thermal, free-radical, or photochemical route is applied to the barrier layer.

The further coating applied, also termed coating composition or outer layer below, advantageously comprises a lacquer, in particular based on epoxy resin, and comprising not only a photoinitiator but also, as further components, at least one reaction product derived from fine pulverulent silicate, for example from a naturally occurring or modified clay or naturally occurring or modified phyllosilicate, in particular mica, and which comprises an organofunctional silane, in particular methacryloxypropyltrimethoxysilane, and water. A system particularly suitable as further coating is that found in the German parallel application with the title "Überzugsmittel zur Erzeugung einer Barriereschicht für Gase" [Coating composition for producing a barrier layer for gases].

The invention further provides the use as claimed in claims 15 to 20, and packaging materials as claimed in claims 21 to 24.

The lamellar metal pigments used in the inventive composition and/or in the coating composition may, by way of example, comprise the metal special-effect pigments known from paints technology, such as aluminum bronzes. This gives the articles coated with the coating composition a decorative appearance.

Another lamellar material which is neither a phyllosilicate nor a metal pigment but can likewise be used in the inventive coating composition is lamellar boron nitride.

The amount advantageously present of the lamellar particles is from 0.5 - 50% by weight, preferably from 20 - 30% by weight, based on the total weight of the coating composition.

The coating composition for the outer layer advantageously comprises, as further constituent, functional silanes. They serve as adhesion promoters to improve the adhesion between barrier layer and substrate. They also serve to modify the surface of the filler particles and the barrier layer. Examples of suitable functional silanes are meth- or ethoxysilanes, vinyl-, epoxy-, or aminofunctional silanes. Examples which may be mentioned are 3-aminopropyltriethoxysilane, 3-aminopropyltrimethoxysilane, 2-aminoethyl-3-aminopropyltrimethoxysilane, methyltrimethoxysilane, methyltriethoxysilane, propyltrimethoxysilane, propyltriethoxysilane, isobutyltrimethoxysilane, isobutyltriethoxysilane, 3-glycidyloxypropyltrimethoxysilane, 3-glycidyloxypropyltriethoxysilane, 3-methacryloxypropyltrimethoxysilane, vinyltrimethoxysilane, 3-mercaptopropyltrimethoxysilane, bis(3-triethoxysilylpropyl)amine, N-(n-butyl)-3-aminopropyltrimethoxysilane, tetraethyl orthosilicate, ethyl polysilicate, vinyltriethoxysilane, octyltriethoxysilane, and hexadecyltrimethoxysilane.

The coating composition for the outer layer advantageously comprises, as further constituent, inorganic nanoparticles. These are inorganic fillers in fine-particle form, where the particle size is in the nanometer range. These nanoparticles not only improve the flow properties of the coating composition but also contribute to an increase in the resistance to permeation by gases. Furthermore, they increase the mechanical stability of the barrier layers produced using the inventive coating composition. An example of a suitable material for achieving the abovementioned properties is fine-particle silica. It increases the viscosity of the coating composition and thus advantageously affects the stability of the same and the processing properties. In addition, the strength of the barrier coating is improved and its scratch resistance and abrasion resistance is increased. The commercially available fine-particle silica generally has a high level of agglomeration. This material should be deagglomerated to the greatest possible extent prior to or during incorporation into the inventive coating compositions.

The coating composition advantageously comprises, as further constituents, pigments and/or dyes for adjusting appearance and/or absorbing ultraviolet, visible, and infrared radiation. Pigments serve for coloring and permit adjustment of gloss and opacity of the barrier layers. UV absorbers and IR absorbers, and light-stabilizer additives, provide additional protection for the packaged product.

To adjust the processing properties of the coating composition for the outer layer, and to improve substrate wetting, the coating compositions may advantageously comprise modifiers, e.g. hydroxylated polybutadienes, fatty alcohols, polypropylene glycols, reactive monomers or reactive oligomers. To improve substrate wetting and water vapor barrier properties, use may be made of polybutadiene or 1-octanol, for example.

To improve wear resistance of the resulting barrier layer, use may be made of fillers, e.g. fumed silica or corundum.

The coating composition for the outer layer is prepared in accordance with the known technological rules, for example via simple mixing of the components and homogenization of the materials by means of a dissolver. If use is made of pigments, dyes, Aerosils, etc., it can be advantageous to use a bead mill to prepare a masterbatch paste. Advice from the raw material producers should be taken into account here.

The invention also provides the use of a coating composition described above for the outer layer for the coating of packaging materials composed of plastic, paper, cardboard, or paperboard, to produce a barrier layer for gases. The substrates to be coated are substrates which are to some extent permeable to substances transportable in gas form, for example gases, vapors, flavors, etc., or substrates intended to be protected from the abovementioned substances transportable in gas form. In this case, the resultant protective coatings therefore provide, in the widest sense, protection from corrosion. Suitable plastics substrates are, inter alia, polyethylene, polypropylene, biaxially oriented polypropylene, polyethylene terephthalate, polystyrene, polycarbonate. The plastics bottles composed of polyethylene terephthalate and increasingly used for the bottling of drinks are particularly important. Other suitable substrates are paper, cardboard, and paperboard. However, the inventive coating compositions can also be used to coat metals, such as iron, aluminum, copper, tin, zinc, and brass, and mineral substrates.

The substrates must be dry and free from grease for application of the inventive coating compositions. Prior rinsing with alcohol, such as isopropanol, may be necessary. In the case of plastics, adhesion to the substrate can be improved by corona pretreatment.

The inventive coating compositions for the outer layer are liquid materials which in principle can be processed by any of the available applications methods, such as spraying, flowcoating, dipping, roller coating, doctoring. Depending on the type of binder, UV radiation or electron beams are used to cure the coating composition on the substrate.

The cured layers produced according to the invention are effective barriers with respect to substances transportable in gaseous form. These substances may be gases in the relatively narrow sense, such as oxygen, nitrogen, carbon dioxide, sulfur dioxide, etc., or gases in the wider sense, such as vapors of water, of alcohols, of flavors, of amines, of aldehydes, of terpenes, etc. The good barrier properties generate numerous possible uses. The products equipped with an inventive barrier layer may be sheet-like or three-dimensional products composed of plastic or of paper materials, for example foils, papers, cardboard, paperboard, combinations of these materials, and hollow articles, such as bottles for the packaging of products which are sensitive to gaseous substances or which emit such substances, e.g. food, consumables, drinks, medicaments, or chemicals. The barrier layer provides protection from spoilage via chemical or physical effects and provides protection from the absorption of flavors and odors.

Examples are used below to provide further illustration of the invention.

### Inventive example 1

### Mixture composed of methacryloxypropyltrimethoxysilane, N-[N'-(2-aminoethyl)-2-aminoethyl]-3-aminopropyltrimethoxysilane and sorbitol (molar ratio 1 : 0.95 : 0.61)

126 g of methacryloxypropyltrimethoxysilane and 126 g of N-[N'-(2-aminoethyl)-2-aminoethyl]-3-aminopropyltrimethoxysilane form an initial charge in a 2.0 l multinecked flask, provided with stirrer, reflux condenser, thermometer, and dropping funnel, and are heated to 65°C. By means of the dropping funnel, a mixture of 412.5 g of methanol and 80.1 g of a 70% strength aqueous solution of sorbitol are metered in with stirring within a period of from 50-60 min. This gives a clear, colorless liquid. The reaction mixture is heated at reflux for 1.5 hours. The product is then cooled and filtered through a glass fiber filter.

The siloxane-sorbitol mixture is a clear, yellowish, storage-stable liquid with a solids content of about 33% to DIN / EN ISO 3251.

To test barrier action, 90 ml of the siloxane-sorbitol mixture are treated, after dilution with methanol to a solids content of 15%, with 300 mg of Lucirin-TPO-L (BASF). PE foil of thickness 65 µm is dipped into this liquid and air-dried. The foil is then run at minimum belt speed and max. lamp power through a laboratory UV system, using inertization with nitrogen (oxygen < 50 ppm). This gave a transparent layer of thickness about 3 µm which had good adhesion. Oxygen permeation was 6 ml/m² d bar (0% r.h.).

### Inventive example 2

### Mixture composed of vinyltrimethoxysilane, N-[N'-(2-aminoethyl)-2-aminoethyl]-3-aminopropyltrimethoxysilane and sorbitol (molar ratio 1 : 0.95 : 0.61)

81.5 g of vinyltrimethoxysilane and 137.9 g of N-[N'-(2-aminoethyl)-2-aminoethyl]-3-aminopropyltrimethoxysilane form an initial charge in a 2.01 multinecked flask, provided with stirrer, reflux condenser, thermometer, and dropping funnel, and are heated to 65°C. By means of the dropping funnel, a mixture of 329.1 g of methanol and 87.3 g of a 70% strength aqueous solution of sorbitol are metered in with stirring within a period of from 30-40 min. This gives a clear, colorless liquid. The reaction mixture is heated at reflux for 1.5 hours. The product is then cooled, treated with 0.1 % of activated carbon, and filtered through a glass fiber filter.

The siloxane-sorbitol mixture after filtration is a clear, yellowish, storage-stable liquid with a viscosity of 9.5 mPa.s and a solids content of about 33.5% to DIN / EN ISO 3251.

Barrier action was tested as stated in inventive example 1. Oxygen permeation with 2 ml/m² d bar (0 % r.h.).

### Inventive example 3

### Mixture composed of vinyltrimethoxysilane highly filled with Aerosil 380, N-[N'-(2-aminoethyl)-2-aminoethyl]-3-aminopropyltriethoxysilane and sorbitol

66.7 g of a vinyltrimethoxysilane^{x)} filled with 25% by weight of Aerosil 380 formed an initial charge in a 2.0 l multinecked flask, provided with stirrer, reflux condenser, thermometer, and dropping funnel, and were heated to 70°C. The material is stirred at this temperature for 50 min and then cooled back to room temperature. 47.7 g of N-[N'-(2-aminoethyl)-2-aminoethyl]-3-aminopropyltrimethoxysilane are then added. The resultant pale yellow, very slightly cloudy liquid is heated to 65°C. By means of the dropping funnel, a mixture of 203.5 g of methanol and 47.7 g of a 70% strength aqueous solution of sorbitol is then metered in with stirring within a period of 40 min. This gives a white liquid. The reaction mixture is heated at reflux for 8 hours. The product is then cooled and filtered through a glass fiber filter.

The siloxane-sorbitol mixture after filtration is a slightly cloudy, yellowish, storage-stable liquid with a solids content of about 35% to DIN / EN ISO 3251.

Barrier action was tested as stated in inventive example 1. The PE foil was very effectively wetted. The transparent film gave an oxygen permeation of 1.4 ml/m² d bar (0% r.h.).

### Comment:

x): The preparation of the vinyltrimethoxysilane filled with Aerosil 380 is described in the German patent application "Hochgefüllte Silan-Zubereitung" [Highly filled silane preparation], application No. 103 30 020.1, in inventive example 2.

### Inventive example 4

### Mixture composed of vinyltriethoxysilane, N-[N'-(2-aminoethyl)-2-aminoethyl]-3-aminopropyltrimethoxysilane and sorbitol (molar ratio 1 : 0.95 : 0.35)

28.5 g of vinyltriethoxysilane and 37.8 g of N-[N'-(2-aminoethyl)-2-aminoethyl]-3-aminopropyltrimethoxysilane form an initial charge in a 250 ml multinecked flask, provided with stirrer, reflux condenser, thermometer, and dropping funnel, and are heated to 70 - 75°C. By means of the dropping funnel, a mixture composed of 99.5 g of ethanol, 12.4 g of a 70% strength aqueous solution of sorbitol and 11.7 g of water is metered in with stirring within a period of 15 - 20 min. The resultant liquid is clear and pale yellow. The reaction mixture is heated at reflux for 1 hour. The product is then cooled and filtered through a glass fiber filter.

The siloxane-sorbitol mixture after filtration is a clear, yellowish, storage-stable liquid with a solids content of about 26% to DIN / EN ISO 3251.

Barrier action was tested as stated in inventive example 1. The transparent film, layer thickness 9.6 µm, gave an oxygen permeation of 1 ml/m² d bar (0% r.h.) and 67.2 ml/m² d bar (50% r.h.).

### Inventive example 5

### Mixture composed of vinyltriethoxysilane, N-[N'-(2-aminoethyl)-2-aminoethyl]-3-aminopropyltrimethoxysilane and resorcinol (molar ratio 1 : 1 : 0.5)

8.3 g of resorcinol dissolved in 100.5 g of ethanol and, in succession, 39.8 g of N-[N'-(2-aminoethyl)-2-aminoethyl]-3-aminopropyltrimethoxysilane, and 28.5 g of vinyltriethoxysilane form an initial charge in a 250 ml multinecked flask, provided with stirrer, reflux condenser, thermometer, and dropping funnel, and are heated to 75 - 80°C. 7.3 g of water are then added dropwise within a period of 5-10 min. The resultant liquid is lemon-yellow and clear. The mixture is heated at reflux for 1 hour. The product is then cooled and filtered through a glass fiber filter.

The siloxane-resorcinol mixture after filtration is a clear, orange, storage-stable liquid with a solids content of about 27% to DIN / EN ISO 3251.

Barrier action of the siloxane-resorcinol mixture was tested as stated in inventive example 1. The transparent film, layer thickness 9.0 µm, gave an oxygen permeation of 6.7 ml/m² d bar (0% r.h.) and 1 ml/m² d bar (50% r.h.).

### Inventive example 6

### Mixture composed of vinyltriethoxysilane, N-[N'-(2-aminoethyl)-2-aminoethyl]-3-aminopropyltrimethoxysilane and resorcinol (molar ratio 1 : 1 : 1)

16.5 g of resorcinol dissolved in 100.5 g of ethanol and, in succession, 39.8 g of N-[N'-(2-aminoethyl)-2-aminoethyl]-3-aminopropyltrimethoxysilane, and 28.5 g of vinyltriethoxysilane form an initial charge in a 250 ml multinecked flask, provided with stirrer, reflux condenser, thermometer, and dropping funnel, and are heated to 75 - 80°C. 7.3 g of water are then added dropwise within a period of 5-10 min. The resultant liquid is lemon-yellow and clear. The mixture is heated at reflux for 1.5 hours. The product is then cooled and filtered through a glass fiber filter.

The siloxane-resorcinol mixture after filtration is a clear, orange, storage-stable liquid with a solids content of about 30% to DIN / EN ISO 3251.

Barrier action of the siloxane-resorcinol mixture was tested as stated in inventive example 1. The transparent film, layer thickness 14.7 µm, gave an oxygen permeation of 1.1 ml/m² d bar (0% r.h.) and 4.5 ml/m² d bar (50% r.h.).

### Comparative example 1

### Mixture composed of methacryloxypropyltrimethoxysilane and N-[N'-(2-aminoethyl)-2-aminoethyl]-3-aminopropyltrimethoxysilane (molar ratio 1 : 0.95)

114.4 g of methacryloxypropyltrimethoxysilane and 114.4 g of N-[N'-(2-aminoethyl)-2-aminoethyl]-3-aminopropyltrimethoxysilane form an initial charge in a 2.0 l multinecked flask, provided with stirrer, reflux condenser, thermometer, and dropping funnel, and are heated to 65°C. By means of the dropping funnel, a mixture of 503.4 g of methanol and 22.0 g of water were metered in with stirring within a period of 20 min. This gives a clear, colorless liquid. The reaction mixture is heated at reflux for 1.5 hours. The product is then cooled and filtered through a glass fiber filter.

The siloxane mixture is a clear, yellowish, storage-stable liquid with a viscosity of 3.2 mPa.s and a solids content of about 23% to DIN / EN ISO 3251.

Barrier action was tested as stated in inventive example 1. The transparent film gave an oxygen permeation of 625 ml/m² d bar (0 % r.h.).

### Comparative example 2

### Mixture composed of vinyltriethoxysilane, N-[N'-(2-aminoethyl)-2-aminoethyl]-3-aminopropyltrimethoxysilane, and resorcinol (molar ratio 2 : 0.5 : 0.5)

8.3 g of resorcinol dissolved in 115.4 g of ethanol and, in succession, 19.9 g of N-[N'-(2-aminoethyl)-2-aminoethyl]-3-aminopropyltrimethoxysilane, and 57.0 g of vinyltriethoxysilane form an initial charge in a 250 ml multinecked flask, provided with stirrer, reflux condenser, thermometer, and dropping funnel, and are heated to 75 - 80°C. 9.2 g of water are then added dropwise within a period of 5-10 min. The resultant liquid is lemon-yellow and clear. The mixture is heated at reflux for 1.5 hours. The product is then cooled and filtered through a glass fiber filter. The siloxane-resorcinol mixture after filtration is a clear, orange, storage-stable liquid with a solids content of about 21 % to DIN / EN ISO 3251.

Barrier action of the siloxane-resorcinol mixture was tested as stated in inventive example 1. The transparent film, layer thickness 6.2 µm, gave an oxygen permeation of 750 ml/m² d bar (0% r.h.) and 420 ml/m² d bar (50% r.h.).

### Example of the preparation of the outer lacquer

120.0 g of 3,4-epoxycyclohexylmethyl 3,4-epoxycyclohexanecarboxylate (commercial name UVACURE 1500; UCB Chemie GmbH) formed an initial charge in a 250 ml stainless steel disperser, and 40 g of phyllosilicate (commercial name MICA M; Merck KGaA) were incorporated with stirring (Dispermat) and dispersed at about 6000 rpm for about 10 minutes. 4.5 g of bis(4-alkylaryl)iodonium hexafluoroantimonate (commercial name UV 9390 c; GE Bayer Silicones GmbH & Co KG) were then added with gentle stirring.

### Usage example of foil lamination

### Composite structure: PET / outer lacquer / silane mixture / outer lacquer / PE

The silane mixture used comprises a product as in inventive example 4. Outer lacquer / silane mixture / outer lacquer application gives an application weight of about 18 to 20 g/m². The oxygen permeation was 5.6 ml/m² d bar (85% r.h.).

### Composite structure: OPP / outer lacquer / silane mixture / outer lacquer / PE

Silane mixture as in inventive example 4 and outer lacquer give, at an application weight of about 18 - 20 g/m² an oxygen permeation of 4.7 ml/m² d bar for the composite structure at 85% r.h.

## Claims

1. An organosilane-based composition for producing a barrier layer for gases, comprising
(i) at least one organoalkoxysilane whose organofunctionality displays at least one unsaturated hyd rocarbon group,
(ii) at least one aminoalkylalkoxysilane,
(iii) at least one polyol,
(iv) optionally, another alkoxysilane or alkoxysiloxane, and
(v) optionally, at least one nano- or microscale semimetal oxide or metal oxide; semimetal oxide hydroxide or metal oxide hydroxide, or semimetal hydroxide or metal hydroxide, and/or
(vi) at least one cocondensate composed of the components (i), (ii), (iii), and, optionally, (iv), and also, optionally, (v), and/or
(vii) reaction products produced under hydrolysis conditions from the components (i), (ii), (iii), and, optionally, (iv), and also, optionally, (v)
(viii) and organic solvent, with the proviso that there is a molar ratio (i) : (ii) : (iii) where (i) = 1 and (ii) = from 0.5 to 1.5, and (iii) = from 0.3 to 1.1.

2. The composition as claimed in claim 1, comprising a component (i) selected from the series vinyltrimethoxysilane, vinyltriethoxysilane, 3-methacryloxypropyltrimethoxysilane, 3-methacryloxypropyltriethoxysilane, 3-methacryloxypropylmethyldimethoxysilane, vinylmethyldimethoxysilane, vinylmethyldiethoxysilane, 3-methacryloxypropylmethyldiethoxysilane, 3-acryloxypropyltrimethoxysilane, 3-acryloxypropyltriethoxysilane, 3-acryloxypropylmethyldimethoxysilane, 3-acryloxypropylmethyldiethoxysilane.

3. The composition as claimed in claim 1 or 2, which comprises a component (ii) selected from the series 3-aminopropyltrimethoxysilane, 3-aminopropyltriethoxysilane, N-phenyl-3-aminopropyltrimethoxysilane, N-phenyl-3-aminopropyltriethoxysilane, N-butyl-3-aminopropyltrimethoxysilane, N-butyl-3-aminopropyltriethoxysilane, N-methyl-3-aminopropyltrimethoxysilane, N-methyl-3-aminopropyltriethoxysilane, N-(2-aminoethyl)-3-aminopropyltrimethoxysilane, N-(2-aminoethyl)-3-aminopropyltriethoxysilane, N,N-di(2-aminoethyl)-3-aminopropyltrimethoxysilane, N-[N'-(2-aminoethyl)-2-aminoethyl]-3-aminopropyltrimethoxysilane, N,N-di(2-aminoethyl)-3-aminopropyltriethoxysilane, N-[N'-(2-aminoethyl)-2-aminoethyl]-3-aminopropyltriethoxysilane, 3-aminopropylmethyldimethoxysilane, 3-aminopropylmethyldiethoxysilane, N-butyl-3-aminopropylmethyldimethoxysilane, N-butyl-3-aminopropylmethyldiethoxysilane, N-(2-aminoethyl)-3-aminopropylmethyldimethoxysilane, N-(2-aminoethyl)-3-aminopropylmethyldiethoxysilane, N,N-di(2-aminoethyl)-3-aminopropylmethyldimethoxysilane, N-[N'-(2-aminoethyl)-2-aminoethyl]-3-aminopropylmethyldiethoxysilane, N,N-di(2-aminoethyl)-3-aminopropylmethyldimethoxysilane, N-[N'-(2-aminoethyl)-2-aminoethyl]-3-aminopropylmethyldiethoxysilane.

4. The composition as claimed in any of claims 1 to 3, wherein component (iii) is an aliphatic or aromatic polyol.

5. The composition as claimed in any of claims 1 to 4, wherein component (iii) comprises glucose, xylitol, mannitol, sorbitol, resorcinol, pyrogallol, hydroquinone, salicylic acid, or glycerol.

6. The composition as claimed in any of claims 1 to 5, which comprises a component (iv) selected from the series tetraethoxysilane, oligomeric tetraalkoxysilane, propyltrimethoxysilane, propyltriethoxysilane, octyltrimethoxysilane, octyltriethoxysilane, alcoholic and/or aqueous compositions of oligomeric cocondensates composed of aminoalkylalkoxysilanes and of fluoroalkylalkoxysilanes, and also oligomeric condensates or cocondensates composed of alkylalkoxysilanes and/or of vinylalkoxysilanes.

7. The composition as claimed in any of claims 1 to 6, which comprises a component (v) selected from the series silica (precipitated or fumed), silicates, aluminum oxides, aluminum oxide hydroxides, aluminum hydroxide.

8. The composition as claimed in any of claims 1 to 7, wherein the organic solvent is a straight-chain or branched, aliphatic or cycloaliphatic or araliphatic or aromatic alcohol.

9. The composition as claimed in any of claims 1 to 8, which comprises photoinitiator.

10. The composition as claimed in any of claims 1 to 9, which comprises from 10 to 60% by weight of solids.

11. A process for preparing an organosilane-based composition for producing a barrier layer for gases as claimed in any of claims 1 to 10, which comprises
a) mixing together components (i), (ii), (iii), optionally (iv), optionally solvents and water, and permitting the mixture to react at room temperature
or
b) forming an initial charge from components (i), (ii), and, optionally, (iv), heating the mixture, adding component (iii), optionally dissolved in a solvent, and adding water, and permitting the mixture to react at reflux
or
c) forming an initial charge from components (i), (ii), optionally (iv), optionally solvents, and, optionally, component (v), with thorough mixing, heating the mixture, adding component (iii), optionally dissolved in a solvent, and adding water, and permitting the mixture to react at reflux
or
d) dispersing fine-particle silica in vinylsilane, adding the other components,
and reacting the mixture at room temperature or at reflux
where there is a molar ratio (i) : (ii) : (iii) where (i) = 1 and (ii) = from 0.5 to 1.5 and (iii) = from 0.3 to 1.1.

12. The process as claimed in claim 11,
wherein
use is made of from 0.5 to 1.8 mol of water per mole of silicon of components (i), (ii), and (iv).

13. The process as claimed in claim 11 or 12,
wherein
the amount used of component (v) is from 0.01 to 40% by weight, based on the entirety of components (i) to (iv).

14. The process as claimed in any of claims 11 to 13,
wherein
the reaction is carried out at a temperature in the range from 10 to 90°C and for a period of from 1 to 36 hours.

15. The use of a composition as claimed in any of claims 1 to 10 or of a composition obtainable as claimed in any of claims 11 to 14 for producing a radiation-cured barrier layer for gases on a packaging material composed of plastic, paper, cardboard, or paperboard.

16. The use of a composition as claimed in any of claims 1 to 10 or a composition obtainable as claimed in any of claims 11 to 15 for producing a radiation-cured barrier layer for gases, where at least one further coating capable of curing by a thermal, free-radical, or radiation method is applied as outer layer to the barrier layer.

17. The use as claimed in claim 16, wherein to produce the outer layer a coating composition is applied which comprises a binder curable by UV radiation or electron beams and comprises inorganic lamellar particles, where either the outer layer material is applied to the cured first barrier layer and then is cured or the first barrier layer and the outer layer are applied wet-on-wet and cured together.

18. The use as claimed in claim 16 or 17, wherein the binder of the coating composition for the outer layer has been selected from the group consisting of acrylates, urethane-derived acrylates, epoxy-derived acrylates, cycloaliphatic epoxides, and polyepoxides.

19. The use as claimed in any of claims 16 to 18, wherein the lamellar particles have been selected from the group of the phyllosilicates or of the lamellar metal pigments.

20. The use as claimed in any of claims 16 to 19, where the further coating applied comprises a lacquer which comprises not only a photoinitiator but also, as further components, at least one reaction product derived from fine pulverulent silicate, organofunctional silane, and water.

21. A packaging material composed of plastic, paper, cardboard, or paperboard, which has been coated with a barrier layer composed of a cured composition as claimed in any of claims 1 to 10.

22. The packaging material as claimed in claim 21, which has been coated with a further cured outer layer which has been arranged on the barrier layer and has been produced by applying and curing a coating composition which comprises a binder curable by UV radiation or electron beams and comprises inorganic lamellar particles.

23. The packaging material as claimed in claim 21 or 22, which is sheet-like and takes the form of foils, sheets, or webs.

24. The packaging material as claimed in claim 21 or 22, which takes the form of three-dimensional hollow articles.

## Patentansprüche

1. Zusammensetzung auf Organosilanbasis zur Erzeugung einer Barriereschicht für Gase, umfassend
(i) mindestens ein Organoalkoxysilan, dessen Organofunktionalität mindestens eine ungesättigte Kohlenwasserstoffgruppe aufweist,
(ii) mindestens ein Aminoalkylalkoxysilan,
(iii) mindestens ein Polyol,
(iv) gegebenenfalls ein weiteres Alkoxysilan oder Alkoxysiloxan und
(v) gegebenenfalls mindestens ein nano- oder mikroskaliges Halbmetall- oder Metalloxid, Halbmetall- oder Metalloxidhydroxid oder Halbmetall- oder Metallhydroxid und/oder
(vi) mindestens ein Cokondensat aus den Komponenten (i), (ii), (iii) und gegebenenfalls (iv) sowie gegebenenfalls (v) und/oder
(vii) unter Hydrolysebedingungen entstehende Reaktionsprodukte aus den Komponenten (i), (ii), (iii) und gegebenenfalls (iv) sowie gegebenenfalls (v)
(viii) ein organisches Lösemittel, mit der Maßgabe, dass ein molares Verhältnis (i) : (ii) : (iii) mit (i) = 1 und (ii) = 0,5 bis 1, 5 und (iii) = 0,3 bis 1,1 vorliegt.

2. Zusammensetzung nach Anspruch 1, die eine Komponente (i) aus der Reihe Vinyltrimethoxysilan, Vinyltriethoxysilan, 3-Methacryloxypropyltrimethoxysilan, 3-Methacryloxypropyltriethoxysilan, 3-Methacryloxypropylmethyldimethoxysilan, Vinylmethyldimethoxysilan, Vinylmethyldiethoxysilan, 3-Methacryloxypropylmethyldiethoxysilan, 3-Acryloxypropyltrimethoxysilan, 3-Acryloxypropyltriethoxysilan, 3-Acryloxypropylmethyldimethoxysilan, 3-Acryloxypropylmethyldiethoxysilan umfasst.

3. Zusammensetzung nach Anspruch 1 oder 2, die eine Komponente (ii) aus der Reihe 3-Aminopropyltrimethoxysilan, 3-Aminopropyltriethoxysilan, N-Phenyl-3-aminopropyltrimethoxysilan, N-Phenyl-3-aminopropyltriethoxysilan, N-Butyl-3-aminopropyltrimethoxysilan, N-Butyl-3-aminopropyltriethoxysilan, N-Methyl-3-aminopropyltrimethoxysilan, N-Methyl-3-aminopropyltriethoxysilan, N-(2-Aminoethyl)-3-aminopropyltrimethoxysilan, N-(2-Aminoethyl)-3-aminopropyltriethoxysilan, N,N-Di(2-aminoethyl)-3-aminopropyltrimethoxysilan, N-[N'-(2-aminoethyl)-2-aminoethyl]-3-aminopropyltrimethoxysilan, N,N-Di(2-aminoethyl)-3-aminopropyltriethoxysilan, N-[N'-(2-aminoethyl)-2-aminoethyl]-3-aminopropyltriethoxysilan, 3-Aminopropylmethyldimethoxysilan, 3-Aminopropylmethyldiethoxysilan, N-Butyl-3-aminopropylmethyldimethoxysilan, N-Butyl-3-aminopropylmethyldiethoxysilan, N-(2-Aminoethyl)-3-aminopropylmethyldimethoxysilan, N-(2-Aminoethyl)-3-aminopropylmethyldiethoxysilan, N,N-Di(2-aminoethyl)-3-aminopropylmethyldimethoxysilan, N-[N'-(2-aminoethyl)-2-aminoethyl]-3-aminopropylmethyldiethoxysilan, N,N-Di(2-aminoethyl)-3-aminopropylmethyldimethoxysilan, N-[N'-(2-aminoethyl)-2-aminoethyl]-3-aminopropylmethyldiethoxysilan umfasst.

4. Zusammerisetzung nach einem der Ansprüche 1 bis 3, wobei es sich bei Komponente (iii) um ein aliphatisches oder aromatisches Polyol handelt.

5. Zusammensetzung nach einem der Ansprüche 1 bis 4, wobei Komponente (iii) Glucose, Xylitol, Mannitol, Sorbitol, Resorcinol, Pyrogallol, Hydrochinon, Salicylsäure oder Glycerin umfasst.

6. Zusammensetzung nach einem der Ansprüche 1 bis 5, die eine Komponente (iv) aus der Reihe Tetraethoxysilan, oligomeres Tetraalkoxysilan, Propyltrimethoxysilan, Propyltriethoxysilan, Octyltrimethoxysilan, Octyltriethoxysilan, alkoholische und/oder wässrige Zusammensetzungen oligomerer Cokondensate aus Aminoalkylalkoxysilanen und Fluoralkylalkoxysilanen, sowie oligomere Kondensate oder Cokondensate aus Alkylalkoxysilanen und/oder Vinylalkoxysilanen umfasst.

7. Zusammensetzung nach einem der Ansprüche 1 bis 6, die eine Komponente (v) aus der Reihe Kieselsäure (gefällt oder pyrogen), Silicate, Aluminiumoxide, Aluminumoxidhydroxide, Aluminiumhydroxid umfasst.

8. Zusammensetzung nach einem der Ansprüche 1 bis 7, wobei das organische Lösemittel ein geradkettiger oder verzweigter, aliphatischer oder cycloaliphatischer oder araliphatischer oder aromatischer Alkohol ist.

9. Zusammensetzung nach einem der Ansprüche 1 bis 8, die Photoinitiator umfasst.

10. Zusammensetzung nach einem der Ansprüche 1 bis 9, die 10 bis 60 Gew.-% Feststoffe umfasst.

11. Verfahren zur Herstellung einer Zusammensetzung auf Organosilanbasis zur Erzeugung einer Barriereschicht für Gase nach einem der Ansprüche 1 bis 10, bei dem man
a) die Komponenten (i), (ii), (iii), gegebenenfalls (iv), gegebenenfalls Lösemittel und Wasser zusammenmischt und die Mischung bei Raumtemperatur reagieren lässt oder
b) die Komponenten (i), (ii) und gegebenenfalls (iv) vorlegt, die Mischung erwärmt, Komponente (iii), gegebenenfalls gelöst in einem Lösemittel, und Wasser zugibt und die Mischung unter Rückfluss reagieren lässt oder
c) die Komponenten (i), (ii), gegebenenfalls (iv), gegebenenfalls Lösemittel und gegebenenfalls Komponente (v) unter guter Durchmischung Vorlegt, die Mischung erwärmt, Komponente (iii), gegebenenfalls gelöst in einem Lösemittel, und Wasser zugibt und die Mischung unter Rückfluss reagieren lässt oder
d) hochdisperse Kieselsäure in Vinylsilan dispergiert, die übrigen Komponenten zugibt und die Mischung bei Raumtemperatur oder unter Rückfluss umsetzt,
wobei ein molares Verhältnis (i) : (ii) : (iii) mit (i) = 1 und (ii) = 0,5 bis 1,5 und (iii) = 0, 3 bis 1,1 vorliegt.

12. Verfahren nach Anspruch 11, bei dem man pro Mol Silicium der Komponenten (i), (ii) sowie (iv) 0,5 bis 1,8 Mol Wasser einsetzt.

13. Verfahren nach Anspruch 11 oder 12, bei dem die verwendete Menge der Komponente (v) 0,01 bis 40 Gew.-%, bezogen auf die Summe der Komponenten (i) bis (iv), beträgt.

14. Verfahren nach einem der Ansprüche 11 bis 13, bei dem man die Umsetzung bei einer Temperatur im Bereich von 10 bis 90°C und über einen Zeitraum von 1 bis 36 Stunden durchführt.

15. Verwendung einer Zusammensetzung nach einem der Ansprüche 1 bis 10 oder einer nach einem der Ansprüche 11 bis 14 erhältlichen Zusammensetzung zur Erzeugung einer strahlengehärteten Barriereschicht für Gase auf einem Verpackungsmaterial aus Kunststoff, Papier, Pappe oder Karton.

16. Verwendung einer Zusammensetzung nach einem der Ansprüche 1 bis 10 oder einer nach einem der Ansprüche 11 bis 15 erhältlichen Zusammensetzung zur Erzeugung einer strahlengehärteten Barriereschicht für Gase, wobei man auf die Barriereschicht mindestens eine weitere, thermisch, radikalisch oder durch Strahlung härtbare Beschichtung als Deckschicht aufbringt.

17. Verwendung nach Anspruch 16, wobei zur Erzeugung der Deckschicht ein Überzugsmittel aufgebracht wird, das ein durch UV-Strahlen oder Elektronenstrahlen härtbares Bindemittel und anorganische plättchenförmige Partikel enthält, wobei entweder das Deckschichtmaterial auf die gehärtete erste Barriereschicht aufgebracht wird und anschließend gehärtet wird oder die erste Barriereschicht und die Deckschicht nass-in-nass aufgebracht werden und gemeinsam gehärtet werden.

18. Verwendung nach Anspruch 16 oder 17, wobei das Bindemittel des Überzugsmittels für die Deckschicht aus der Gruppe bestehend aus Acrylaten, Urethanacrylaten, Epoxy-Acrylaten, cycloaliphatischen Epoxiden und Polyepoxiden ausgewählt ist.

19. Verwendung nach einem der Ansprüche 16 bis 18, wobei die plättchenförmigen Partikel aus der Gruppe der Schichtsilikate oder der plättchenförmigen Metallpigmente ausgewählt sind.

20. Verwendung nach einem der Ansprüche 16 bis 19, wobei man als weitere Beschichtung einen Lack aufbringt, der neben einem Photoinitiator als weitere Komponenten mindestens ein Umsetzungsprodukt aus feinpulvrigem Silicat, organofunktionelles Silan und Wasser enthält.

21. Verpackungsmaterial aus Kunststoff, Papier, Pappe oder Karton, das mit einer Barriereschicht aus einer gehärteten Zusammensetzung nach einem der Ansprüche 1 bis 10 beschichtet ist.

22. Verpackungsmaterial nach Anspruch 21, das mit einer weiteren gehärteten Deckschicht beschichtet ist, die auf der Barriereschicht angeordnet ist und durch Aufbringung und Härtung eines Überzugsmittels hergestellt worden ist, das ein durch UV-Strahlen oder Elektronenstrahlen härtbares Bindemittel und anorganische plättchenförmige Partikel umfasst.

23. Verpackungsmaterial nach Anspruch 21 oder 22, das flächig in Form von Folien, Bögen oder Bahnen vorliegt.

24. Verpackungsmaterial nach Anspruch 21 oder 22, das in Form von dreidimensionalen Hohlkörpern vorliegt.

## Revendications

1. Composition à base d'organosilanes pour la production d'une couche barrière pour les gaz, comprenant
(i) au moins un organoalcoxysilane dont la fonctionnalité organique présente au moins un groupe hydrocarboné insaturé,
(ii) au moins un aminoalkylalcoxysilane,
(iii) au moins un polyol,
(iv) facultativement, un autre alcoxysilane ou alcoxysiloxane et
(v) facultativement, au moins un oxyde semi-métallique ou oxyde métallique, oxyhydroxyde semi-métallique ou oxyhydroxyde métallique ou hydroxyde semi-métallique ou hydroxyde métallique de dimension nanométrique ou micrométrique et/ou
(vi) au moins un produit de co-condensation composé des composants (i), (ii), (iii) et, facultativement, (iv) et également, facultativement, (v) et/ou
(vii) des produits réactionnels produits dans des conditions d'hydrolyse à partir des composants (i), (ii), (iii) et, facultativement, (iv) et également, facultativement, (v), et
(viii) un solvant organique,
à condition qu'il y ait un rapport molaire (i) : (ii) : (iii) où (i) = 1 et (ii) = de 0,5 à 1,5 et (iii) = de 0,3 à 1,1.

2. Composition selon la revendication 1, comprenant un composant (i) choisi parmi le vinyltriméthoxysilane, le vinyltriéthoxysilane, le 3-méthacryloxypropyltriméthoxysilane, le 3-méthacryloxypropyltriéthoxysilane, le 3-méthacryloxypropylméthyldiméthoxysilane, le vinylméthyldiméthoxysilane, le vinylméthyldiéthoxysilane, le 3-méthacryloxypropylméthyldiéthoxysilane, le 3-acryloxypropyltriméthoxysilane, le 3-acryloxypropyltriéthoxysilane, le 3-acryloxypropylméthyldiméthoxysilane, le 3-acryloxypropylméthyldiéthoxysilane.

3. Composition selon la revendication 1 ou 2, qui comprend un composant (ii) choisi parmi le 3-aminopropyltriméthoxysilane, le 3-aminopropyltriéthoxysilane, le N-phényl-3-aminopropyltriméthoxysilane, le N-phényl-3-aminopropyltriéthoxysilane, le N-butyl-3-aminopropyltriméthoxysilane, le N-butyl-3-aminopropyltriéthoxysilane, le N-méthyl-3-aminopropyltriméthoxysilane, le N-méthyl-3-aminopropyltriéthoxysilane, le N-(2-aminoéthyl)-3-aminopropyltriméthoxysilane, le N-(2-aminoéthyl)-3-aminopropyltriéthoxysilane, le N,N-di(2-aminoéthyl)-3-aminopropyltriméthoxysilane, le N-[N'-(2-aminoéthyl)-2-aminoéthyl]-3-aminopropyltriméthoxysilane, le N,N-di(2-aminoéthyl)-3-aminopropyltriéthoxysilane, le N-[N'-(2-aminoéthyl)-2-aminoéthyl]-3-aminopropyltriéthoxysilane, l e 3-aminopropylméthyldiméthoxysilane, le 3-aminopropylméthyldiéthoxysilane, le N-butyl-3-aminopropylméthyldiméthoxysilane, le N-butyl-3-aminopropylméthyldiéthoxysilane, le N-(2-aminoéthyl)-3-aminopropylméthyldiméthoxysilane, le N-(2-aminoéthyl)-3-aminopropylméthyldiéthoxysilane, le N,N-di(2-aminoéthyl)-3-aminopropylméthyldiméthoxysilane, le N-[N'-(2-aminoéthyl)-2-aminoéthyl]-3-aminopropylméthyldiéthoxysilane, le N,N-di(2-aminoéthyl)-3-aminopropylméthyldiméthoxysilane, le N-[N'-(2-aminoéthyl)-2-aminoéthyl]-3-aminopropylméthyldiéthoxysilane.

4. Composition selon l'une quelconque des revendications 1 à 3, dans laquelle le composant (iii) est un polyol aliphatique ou aromatique.

5. Composition selon l'une quelconque des revendications 1 à 4, dans laquelle le composant (iii) comprend du glucose, du xylitol, du mannitol, du sorbitol, du résorcinol, du pyrogallol, de l'hydroquinone, de l'acide salicylique ou du glycérol.

6. Composition selon l'une quelconque des revendications 1 à 5, qui comprend un composant (iv) choisi parmi le tétraéthoxysilane, un tétraalcoxysilane oligomère, le propyltriméthoxysilane, le propyltriéthoxysilane, l'octyltriméthoxysilane, l'octyltriéthoxysilane, les compositions alcooliques et/ou aqueuses de produits de co-condensation oligomères composés d'aminoalkylalcoxysilanes et de fluoroalkylalcoxysilanes et également les produits de condensation ou produits de co-condensation oligomères composés d'alkylalcoxysilanes et/ou de vinylalcoxysilanes.

7. Composition selon l'une quelconque des revendications 1 à 6, qui comprend un composant (v) choisi parmi la silice (précipitée ou sublimée), les silicates, les oxydes d'aluminium, les oxyhydroxydes d'aluminium et l'hydroxyde d'aluminium.

8. Composition selon l'une quelconque des revendications 1 à 7, dans laquelle le solvant organique est un alcool aliphatique à chaîne droite ou ramifié ou cycloaliphatique ou arylaliphatique ou aromatique.

9. Composition selon l'une quelconque des revendications 1 à 8, qui comprend un photoinitiateur.

10. Composition selon l'une quelconque des revendications 1 à 9, qui comprend de 10 à 60 % en poids de matières solides.

11. Procédé pour la préparation d'une composition à base d'organosilanes pour la production d'une couche barrière pour les gaz selon l'une quelconque des revendications 1 à 10, qui comprend
a) le mélange des composants (i), (ii), (iii), facultativement (iv), facultativement de solvants et d'eau, ensemble et le fait de laisser le mélange réagir à température ambiante
ou
b) la formation d'une charge initiale à partir des composants (i), (ii) et, facultativement, (iv), le chauffage du mélange, l'ajout du composant (iii), facultativement dissous dans un solvant, et l'ajout d'eau et le fait de laisser le mélange réagir au reflux
ou
c) la formation d'une charge initiale à partir des composants (i), (ii), facultativement (iv), facultativement de solvants et, facultativement, du composant (v), avec un bon mélange, le chauffage du mélange, l'ajout du composant (iii), facultativement dissous dans un solvant, et l'ajout d'eau et le fait de laisser le mélange réagir au reflux
ou
d) la dispersion de silice sous forme de fines particules dans du vinylsilane, l'ajout des autres composants et la réaction du mélange à température ambiante ou au reflux
dans lequel il y a un rapport molaire (i):(ii):(iii) où (i) = 1 et (ii) = de 0,5 à 1,5 et (iii) = de 0, 3 à 1, 1.

12. Procédé selon la revendication 11, dans lequel on utilise de 0,5 à 1,8 mole d'eau pour une mole de silicium des composants (i), (ii) et (iv).

13. Procédé selon la revendication 11 ou 12, dans lequel la quantité de composant (v) utilisée est de 0,01 à 40 % en poids, sur la base de la totalité des composants (i) à (iv).

14. Procédé selon l'une quelconque des revendications 11 à 13, dans lequel la réaction est effectuée à une température dans la plage de 10 à 90 °C et sur une durée de 1 à 36 heures.

15. Utilisation d'une composition selon l'une quelconque des revendications 1 à 10 ou d'une composition pouvant être obtenue selon l'une quelconque des revendications 11 à 14 pour la production d'une couche barrière pour les gaz durcie par rayonnement sur un matériau d'emballage composé de plastique, de papier, de carton ou de carton-pâte.

16. Utilisation d'une composition selon l'une quelconque des revendications 1 à 10 ou d'une composition pouvant être obtenue selon l'une quelconque des revendications 11 à 15 pour la production d'une couche barrière pour les gaz durcie par rayonnement, dans laquelle au moins un autre revêtement pouvant durcir par un procédé thermique, radicalaire ou par rayonnement est appliqué en tant que couche externe sur la couche barrière.

17. Utilisation selon la revendication 16, dans laquelle pour produire la couche externe on applique une composition de revêtement qui comprend un liant durcissable par rayonnement UV ou des faisceaux d'électrons et qui comprend des particules inorganiques lamellaires, dans laquelle soit le matériau de couche externe est appliqué sur la première couche barrière durcie puis est durci soit la première couche barrière et la couche externe sont appliquées en voie humide sur humide et durcies ensemble.

18. Utilisation selon la revendication 16 ou 17, dans laquelle le liant de la composition de revêtement pour la couche externe a été choisi parmi les acrylates, les acrylates dérivés d'uréthane, les acrylates dérivés d'époxy, les époxydes cycloaliphatiques et les polyépoxydes.

19. Utilisation selon l'une quelconque des revendications 16 à 18, dans laquelle les particules lamellaires ont été choisies parmi les phyllosilicates ou les pigments métalliques lamellaires.

20. Utilisation selon l'une quelconque des revendications 16 à 19, dans laquelle le revêtement supplémentaire appliqué comprend une laque qui comprend non seulement un photoinitiateur mais également, comme autres composants, au moins un produit réactionnel dérivé de silicate pulvérulent fin, de silane organofonctionnel et d'eau.

21. Matériau d'emballage composé de plastique, de papier, de carton ou de carton-pâte, qui a été revêtu d'une couche barrière composée d'une composition durcie selon l'une quelconque des revendications 1 à 10.

22. Matériau d'emballage selon la revendication 21, qui a été revêtu d'une autre couche externe durcie qui a été disposée sur la couche barrière et qui a été produite par application et durcissement d'une composition de revêtement qui comprend un liant durcissable par rayonnement UV ou des faisceaux d'électrons et qui comprend des particules inorganiques lamellaires.

23. Matériau d'emballage selon la revendication 21 ou 22, qui est en feuille et qui prend la forme de plaques minces, de feuilles ou de bandes continues.

24. Matériau d'emballage selon la revendication 21 ou 22, qui prend la forme d'articles tridimensionnels creux.
